# EUROPEAN PATENT APPLICATION

(11) **EP 0 746 998 A1**
(43) Date of publication of application: **11.12.1996**
(21) Application number: 96107949.8
(22) Date of filing: 18.05.1996
(51) Int. Cl.: A47J 43/14

(54) **Machine for automatically shelling fresh eggs**

(30) Priority: 09.06.1995 IT PN950032
(71) Applicant: FPS Food Processing Systems B.V., NL-3771 VE Barneveld (NL)
(72) Inventor: Pettazzi, Gianluigi, 20137 Milano (IT)
(74) Representative: Busca, Luciano

(57) **Abstract**

Machine for automatically shelling fresh eggs, comprising a plurality of operative lines (1) in a side-by-side arrangement that are driven by driving means (4), are adapted to receive the eggs from feeding means (7) and extend each one on a substantially vertical plane. Said operative lines (1) develop each one on a single closed-loop configuration, along which a plurality of hinged compact groups (3) is distributed for breaking the shell of the eggs and collecting the yolk and the almbumen thereof.

## Description

The present invention refers to an automatic machine capable of breaking off and stripping the shell from fresh eggs that are supplied to it in sequence by a conveyor or similar means, as well as distinctly collecting the yolk and the albumen of each one of said eggs in view of a separate storage thereof in appropriate containers.

Such machines are generally of the carrousel type, with a closed-loop conveyor extending on a horizontal plane and carrying a plurality of compact operative groups, each one of which receives cyclically an egg from a feeder, breaks off the shell thereof by means of a knife-type apparatus, and separately collects the yolk and the albumen thereof into respective, appropriately sized cups placed upon each other, in view of conveying them into respective, separate storage containers. In particular, in each compact operative group both the shell-breaking means and the collecting cups are arranged above each other and aligned vertically. Machines of this king are for instance described in US-A-4 137 838 and US-A-4 321 864.

In view of reducing the space requirements of such carrousel-like machines, automatic egg shelling machines have been proposed which have a plurality of continuous operative lines in a side-by-side arrangement, each one extending vertically. A machine of this kind is for instance described in IT-A-1 223 181, wherein each operative line is in turn formed by two separate closed-loop conveyors arranged upon each other and extending on the same vertical plane. In particular, the upper conveyor carries a plurality of egg-shell breaking apparatuses, whereas the lower conveyor carries a plurality of groups for separately collecting the yolks and the albumens of said eggs.

Such a solution enables an output capacity to be reached which is certainly greater than the one ensured by carrousel-type machines. However, it still has some drawbacks. In particular:
- In each operative line, the movement of the two conveyors running one above the other must be accurately synchronized so as to enable the contents of the eggs supported and shelled in correspondence of the upper conveyor to be correctly collected on the front portion of the machine, in correspondence of the lower conveyor. This involves an undesired complication the machine from both a construction and a functional point of view.
- Since sanitary regulations call for the egg yolks and albumens collected in such lower conveyors to be regularly inspected, the need arises for said lower conveyors to extend horizontally beyond the corresponding upper conveyors, so that the whole machine has to undergo definite shape and size constraints (particularly lengthwise) that prevents it from being compact to any satisfactory extent.
- The above cited geometrical displacement of the conveyors with respect to each other does not allow for an adequate inspection to be carried out at the same time by a single operator of both the shells of the eggs (on the upper conveyors) and their contents (on the lower conveyors) This of course makes it quite more difficult and critical to operate and use the machine under highest possible sanitary safety conditions. In any case, the operator inspecting the collecting means is quite likely to fail to take notice of eggs that may possibly remain unshelled, ie. not broken, due to any malfunction whatsoever, and that are therefore sent directly to a discharge, in which case the result is a reduced production yield and efficiency of the machine.
- The broken shells fall to collect into a screw-type discharge gutter-like channel arranged at the base of the upper conveyors, in correspondence of the end portion (return point) beyond which the lower conveyors are extending. It therefore ensues that during the translation of the broken shells along the upper conveyors, filamentous drippings of albumen may occur which settle on to the edge of said gutter-like channel, from which therefore a substantially continuous, filiform downfall of albumen starts to take place. Should at least one of the shelled eggs turn out to be of a non-edible quality, the respective dripping of albumen therefrom can progressively contaminate the discharge channel, the collecting means carried on the conveyors thereunder and the product collected thereinto. The consequences of such a process are clearly apparent.
- Similar contamination problems may arise in correspondence of the various reservoirs in which the edible product (yolk, albumen, mixed product) is stored, since they are situated downstream of a reservoir used to store non-edible product, ie. product which is unfit for food. In fact, should the product contained in a collecting means be found to be non-edible, the same collecting means is actuated by an operator to cause it to discharge said product into the appropriately provided storage reservoir. It is therefore practically impossible to prevent drippings of such non-edible product from taking place in correspondence of the following storage reservoirs, where they would eventually contaminate the contents thereof. Such a problem is particularly felt in correspondence of the reservoir in which the yolks are stored, since this is generally arranged in correspondence of the rear end portion of the machine, on the outside of the operative lines, ie. in a position at which the direction of movement of the lower conveyors is reversed and, as a result, the above mentioned undesirable dripping is more likely to occur. On the other hand, such a relative arrangement of the various storage reservoirs is necessary in order to provide adequate space for the operator to conveniently inspect the product being carried by the collecting means without any need arising for the space occupied by the machine lengthwise to be further increased.
- Some more delicate yolks can undesirably rupture when falling from a shell-breaking apparatus down to the associated collecting means provided therebelow. Such a drawback is common to carrousel-type egg shelling machines provided with compact shell-breaking and collecting means, since the shortest possible yolk falling height is usually determined by geometric and/or size constraints. The practical result is a substantial drop in the efficiency of such machines.

It is therefore a main purpose of the present invention to provide an automatic machine for shelling fresh eggs, in which all such typical drawbacks associated to traditional machines are minimized.

In particular, it is a purpose of the present invention to provide an automatic egg shelling machine which is particularly compact and simple in its structure and is capable of operating in a simple, reliable manner with a high degree of efficiency.

An additional purpose of the present invention is to provide a machine of the afore mentioned kind, which is generally capable of operating under utmost safe hygienical conditions.

According to the present invention, such aims are reached in a machine for automatically shelling fresh eggs, which embodies the features as recited in the appended claims.

The characteristics and the advantages of the present invention will anyway be more clearly understood from the description that is given below by way of non-limiting example with reference to the accompanying drawings, in which:
- Figure 1 is a schematical side view of the machine according to the present invention, in which only the most significant, peculiar component parts are shown;
- Figure 2 is a schematical rear view of the machine illustrated in Figure 1, in which some component parts have been omitted for reasons of greater clarity;
- Figure 3 is a schematical side view of a magnified detail of the machine illustrated in Figure 1, according to a preferred embodiment; and
- Figure 4 is a schematical front view of the detail shown in Figure 3.

Referring to the above cited Figures, the egg shelling machine can be noticed to comprise a plurality of operative lines 1 in a side-by-side arrangement, each one of which is for instance formed by a closed-loop chain 2 extending on a substantially vertical plane and mounted on appropriate reversing rollers 5 and guiding systems so as to be able to be driven by motor driving means 4. Freely hinged on to said chain 2 there are a plurality of compact groups 3 for carrying the eggs, breaking the shell thereof, and collecting the yolk and the albumen separately.

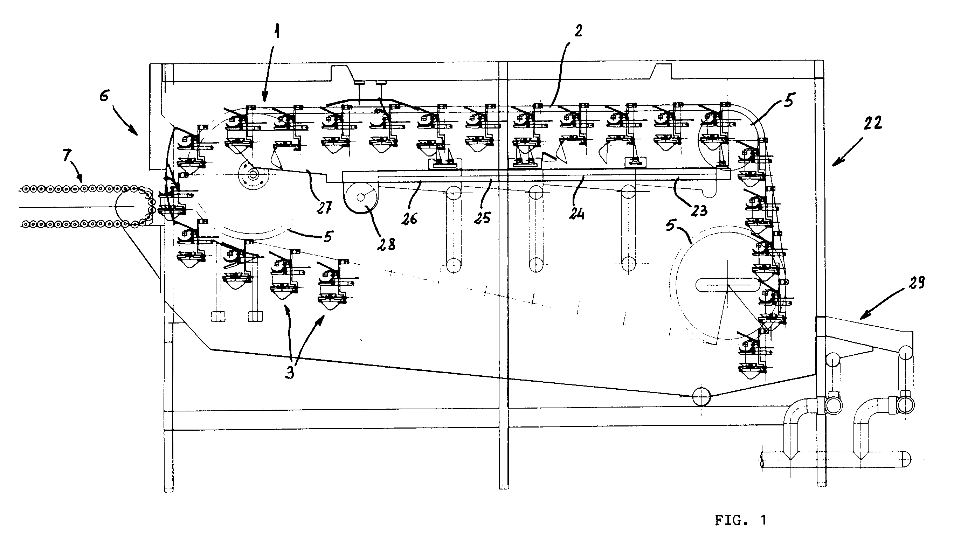

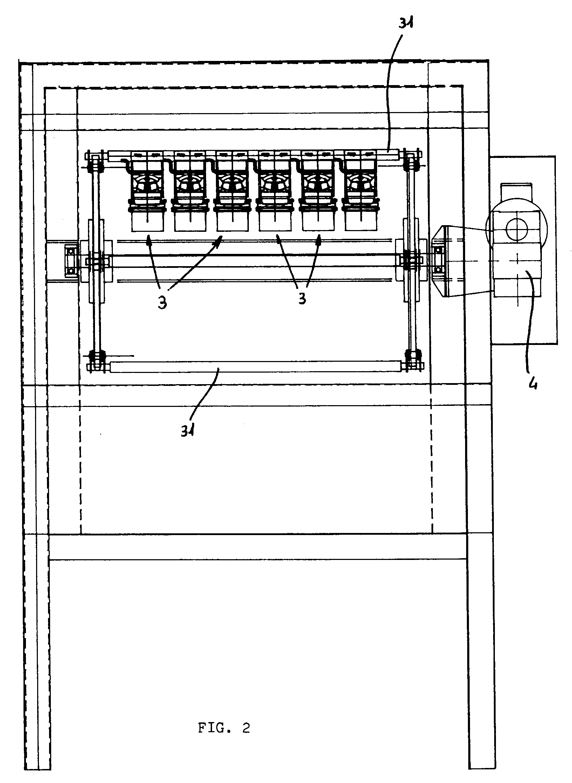

As may be noticed in Figure 1, each operative line 1 extends to form a single closed-loop configuration, along which the above mentioned compact groups 3 are distributed, so that, as it will be more apparent further on, the whole machine is given a simple, compact and rational structure. In a *per sè* known manner, said operatives lines in said side-by-side arrangement are preferably interconnected by means of appropriate cross-beams 31 (Figure 2) and are caused to progress simultaneously, at the same pace.

The machine has a front end portion 6 in correspondence of which there is provided at least a roller-type or similar feeding apparatus 7 which is adapted to convey the fresh eggs in sequence toward said groups 3.

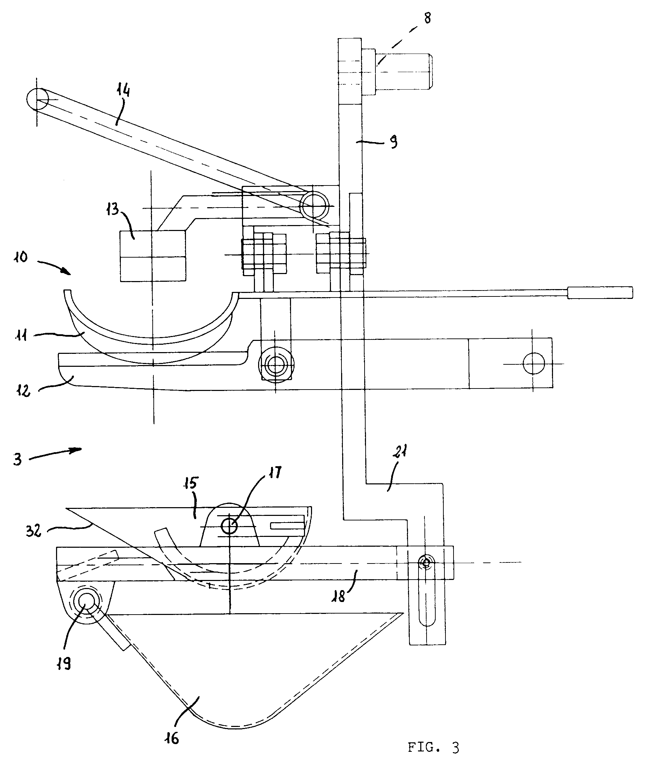

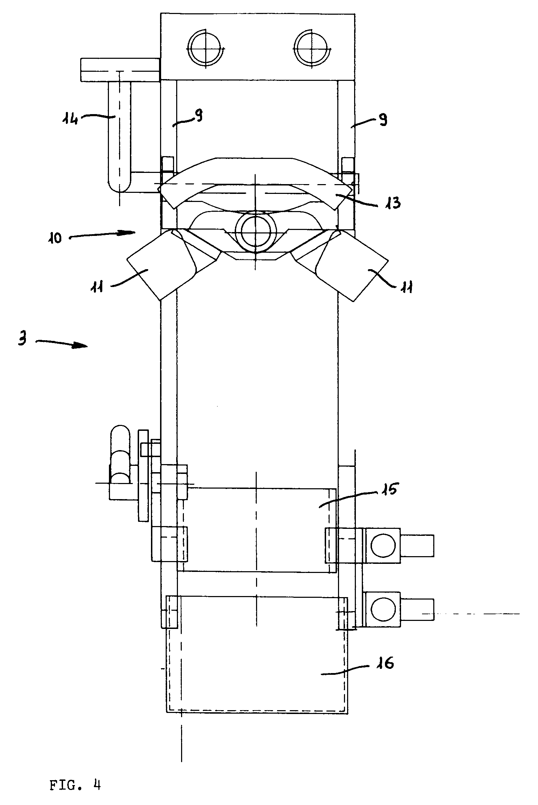

As shown particularly in Figures 3 and 4, each one of said groups 3 is hinged on to the respective chain 2 at an upper point 8 from which a pair of bars 9 carrying a shell-breaking apparatus 10 extend downwards. In a *per sè* known manner, as described for instance in US-A-4 321 864, said shell-breaking apparatus 10 comprises in turn two support jaws 11 provided in a side-by-side arrangement and capable of being moved apart, between which there is provided an apparatus 12 hinged in a knife-like configuration thereto. Above said jaws 11 there is hinged a retaining arm 13 associated to an actuating lever 14.

Underneath the shell-breaking apparatus 10, each compact group 3 is further provided with a collecting apparatus comprising a pan 15 and a cup 16 to collect the yolk and the albumen, respectively. In particular, the pan 15 and the cup 16 are substantially aligned along the vertical, in a position which lies behind with respect to the shell-breaking apparatus 10. In particular, an inclined chute 32 extending in correspondence of the vertical line passing through the shell-breaking apparatus 10 protrudes frontally from the pan 15. The pan 15 is hinged centrally at 17, so as to be able to be normally kept in a horizontal position, on to at least a longitudinal cross-beam 18, to which also the cup 16 is hinged (for instance, frontally at 19).

In a *per sè* known manner, also the cup 16 is normally kept in a horizontal position and each collecting apparatus 15, 16 is associated to linkages (not shown for greater simplicity) which can be actuated into various positions that selectively allow for the yolk and albumen to be unloaded separately, jointly or into a waste collecting container in case of non-edible or non-food quality product. The cross-beam 18 is mounted on the rear side on a bracket 21 extending rearwards from the lower end portion of the bars 9.

Conclusively, the structure of the groups 3 turns out to be particularly compact, to such an extent as to allow for the chute 32 to be positioned close to the shell-breaking apparatus 10, with respect to which the whole product collecting apparatus 15, 16 is on the contrary displaced advantageously backwards. In this connection, it should be noticed that, when the operative lines 1 are in motion, each compact group 3 must move along with the front end portions of the jaws 11 running flush with the feeding apparatus, ie. coming into the closest possible relation therewith, so as to ensure a safe transfer of the fresh eggs from said feeding apparatus to said compact groups 3. Now, this would not be possible in the case of compact groups of a traditional type, ie. with shell-breaking apparatus and collecting apparatus arranged above each other on the same vertical line. As a matter of fact, the pan 15 and the cup 16 must have horizontal dimensions that are larger than the jaws 11 of the shell-breaking apparatus so as to be able to collect the liquid contents of the shelled eggs without any spillage. As a consequence, in a machine according to the present invention in which the operative lines 1 develop along a single vertical closed-loop configuration, it would be practically impossible to move the groups 3 so as to enable the jaws 11 to skim, ie. to correctly come close by the feeding apparatus 7. This could theoretically be achieved by providing the jaws 11 with front protrusions that are adapted to receive the still sound eggs and rotate them into a proper shell-breaking position. In practice, however, such a solution is impracticable since it would imply a state of instability of the eggs as they are rotated, and therefore a substantial ineffectiveness of the machine, along with an undesired oversizing of the compact groups. Quite to the contrary, according to a feature of the present invention such problems are solved in a simple and effective manner thanks to the afore mentioned rearwards offset position of the collecting apparatuses 15, 16 (which eliminates the geometrical interferences) and the presence of the chutes 32 (which enable the liquid content of the broken eggs to be collected optimally without taking up any substantial space vertically).

It should further be noticed thatin each compact group 3 the chute 32 lying close to the shell-breaking apparatus 10 is capable of most delicately collecting and transferring the liquid content of the broken eggs from said shell-breaking apparatus 10 to the separate collection means 15, 16. In this manner, also most delicate egg yolks can be collected without any risk of rupture.

In a preferred manner, the closed-loop configurations formed by the operative lines 1 have a horizontally elongated conformation, while reservoirs are provided inside them in a substantially horizontally aligned arrangement for the differentiated storage of the product. In particular, starting from the rear end portion 22 through to the fron end portion 6 of the machine there are successively provided a reservoir 23 for the storage of the albumen, a reservoir 24 for the storage of the yolk, a reservoir 25 for the storage of mixed product, a reservoir 26 for the storage of non-edible or non-food quality product, as well as (preferably downstream of all such reservoirs) an arrangement 27 for washing the compact groups 3. In a preferred manner, a screw-type discharge chute 28, of a *per sè* known type, is provided between the washing arrangement 27 and the reservoir 26 to collect and discharge the broken shells of the eggs.

In correspondence of its rear end portion 22, the machine further comprises a tank or similar vessel 29 for the inspection of the stored albumen.

The egg shelling machine is of course completed by the provision of appropriate mechanisms for a time-controlled operation thereof and the resetting of the compact groups 3, such mechanisms being for instance of the type comprising cams and associated position checks. Additionally, the machine may comprise mechanisms to drive the screw 28, the washing apparatus 27, etc. All such mechanisms may be of any purpose-suiting kind, such as described for instance in the afore cited prior patent specifications. For greater simplicity they will not therefore be described here any further, the more so because they are not actually a part of the present invention.

From the above description the way in which the egg shelling machine generally operates can be inferred quite clearly, so that there is no point in getting further down to details here. Only the most significant parts thereof will be shortly described in the following.

With reference to Figure 1, it can be seen that each one of the side-by-side operative lines 1 is driven in an anti-clockwise direction and each group 3 passes moves along in sequence by the feeding arrangement 7 to pick up a fresh egg with the jaws 11. The shell of the egg is then broken through a jerking movement of the knife-like apparatus 12, while the two halves of the broken shell are parted from each other through a movement of the jaws 11 that open apart so as to enable the liquid content of the egg to fall down by gravity from the shell-breaking apparatus 10. Such a liquid content, or liquid product, is collected by the chute 32 thereunder, that conveys it delicately toward the pan 15 where the yolk is collected. In a *per sè* known manner, the albumen separates by gravity from the yolk and falls into the cup 16 thereunderneath.

Thanks to the operative lines 1 developing along individual vertically extending closed loops supporting compact groups 3, during the motion of translation thereof an operator (who is preferably standing in correspondence of the rear end portion 22 of the machine) can conveniently inspect, so as to be able to intervene in the most appropriate manner, not only the product contained in the collecting apparatuses 15, 16, but also the possible presence of unbroken eggs in correspondence of the shell-breaking apparatuses 10.

In a *per sè* known manner, said operator will act on the appropriate leverages according to the needs as they arise. As a result, at the upper portion of the machine the pans 15 and the cups 16 are normally "released" to pour their respective contents into the therewith associated storage reservoirs in a differentiated manner. In particular, the albumen in the cups 16 is poured into the reservoir 23 and the yolk in the pans 15 is poured into the reservoir 24. Alternatively, both products may be poured into a same reservoir 25 provided to store the mixed product.

Should the operator find out that the product collected by the apparatuses 15, 16 is not fit for human consumption, ie. not suitable for food applications, he or she intervenes on the respective leverages so as to cause the same apparatuses 15, 16 to be operated in a manner that they will pour their contents into a properly provided reservoir 26. It should be noticed that, due to the fact that this reservoir 26 is arranged downstream of the other storage reservoirs (as well as upstream of the washing arrangement 27), there is practically no possibility for non-food quality product to drip accidentally into the storage reservoirs 23, 24, 25, where it would clearly contaminate the food-quality, edible contents thereof. Such a condition of hygienical safety is further enhanced by the side-by-side arrangement od the reservoirs within the operative lines, ie. in positions in which the compact groups 3 are not subject to any particular, undesired vibration.

It should further be noticed that the relative arrangement of the various operative organs of the machine as described above, is such as to prevent any filamentary accumulation of albumen from forming on the borders of the screw-type chute 28, from which no undesired spilling of product can therefore take place to possibly contaminate the contents of the underlying compact groups 3. In a *per sè* knowm manner, the chute 28 collects and discharges the broken shells as they are released from the shell-breaking apparatuses 10.

Each operation cycle is then completed by a possibly provided washing-up and the resetting of the compact groups 3, which come then to pass again by the feeding apparatus 7 under appropriate cleanliness conditions and in a correct position.

It will be appreciated that the described egg shelling machine can be the subject of a number of modifications without departing from the scope of the present invention.

## Claims

1. Machine for automatically shelling fresh eggs, comprising a plurality of operative lines in a side-by-side arrangement that are driven by driving means, are adapted to receive the eggs from feeding means and extend each one on a substantially vertical plane, **characterized in that** said operative lines (1) extend each one in a single closed-loop configuration, along which a plurality of compact groups (3) is distributed for breaking the shells of the eggs and collecting the yolk and the almbumen thereof separately.

2. Egg shelling machine according to claim 1, in which each one of said compact groups further comprises a breaking apparatus arranged above a collecting apparatus formed by a yolk collecting pan placed above an albumen collecting cup, **characterized in that** said collecting apparatus (15, 16) is arranged, relative to said feeding means (7), in a backwards offset position with respect to the shell-breaking apparatus (10).

3. Egg shelling machine according to claim 2, **characterized in that** from the pan (15) for the yolk there is protruding frontally an inclined chute (32) extending in correspondence of the vertical line passing through the shell-breaking apparatus (10), and adjacent thereto, so as to collect the content of an egg falling from the shell-breaking apparatus and convey it toward the pan (15) and then toward the cup (16).

4. Egg shelling machine according to claim 1, comprising a plurality of reservoirs for the differentiated storage of albumen, yolk and mixed product, as well as non-food grade product, as conveyed by said compact groups, **characterized in that** all such reservoirs (23-26) are arranged, substantially aligned with each other in a horizontal pattern, within the closed-loop configurations formed by the operative lines (1) on a side-by-side arrangement.

5. Egg shelling machine according to claim 4, **characterized in that** said reservoir (26) provided to store non-food grade product is situated downstream of the other reservoirs (23-25).

6. Egg shelling machine according to claim 5, comprising screw-type chute means for collecting and discharging the broken shells of the eggs, **characterized in that** said screw-type chute means (28) are arranged within the closed-loop configurations formed by the operative lines (1) on a side-by-side arrangement.
